(19) Europäisches Patentamt
European Patent Office
Office européen des brevets

(11) **EP 4 447 142 B1**

(12) **EUROPEAN PATENT SPECIFICATION**

(45) Date of publication and mention
of the grant of the patent:
**15.10.2025 Bulletin 2025/42**

(21) Application number: **23217653.7**

(22) Date of filing: **18.12.2023**

(51) International Patent Classification (IPC):
$H01M\ 4/131^{(2010.01)}$ $\quad$ $H01M\ 4/133^{(2010.01)}$
$H01M\ 4/36^{(2006.01)}$ $\quad$ $H01M\ 4/505^{(2010.01)}$
$H01M\ 4/525^{(2010.01)}$ $\quad$ $H01M\ 4/58^{(2010.01)}$
$H01M\ 4/587^{(2010.01)}$ $\quad$ $H01M\ 10/0525^{(2010.01)}$
$H01M\ 4/02^{(2006.01)}$

(52) Cooperative Patent Classification (CPC):
H01M 4/131; H01M 4/133; H01M 4/366;
H01M 4/505; H01M 4/525; H01M 4/5825;
H01M 4/587; H01M 10/0525; H01M 2004/021;
Y02E 60/10

(54) **CELL AND ELECTRONIC DEVICE**

ZELLE UND ELEKTRONISCHE VORRICHTUNG

CELLULE ET DISPOSITIF ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.04.2023 CN 202310407390**

(43) Date of publication of application:
**16.10.2024 Bulletin 2024/42**

(73) Proprietor: **AESC Japan Ltd.**
**Yokohama-Shi, Kanagawa 220-0012 (JP)**

(72) Inventors:
• **QU, Yanglu**
**Jiangyin City, Wuxi City, 214443 (CN)**
• **XU, Yonggang**
**Jiangyin City, Wuxi City, 214443 (CN)**
• **CAO, Yuhao**
**Jiangyin City, Wuxi City, 214443 (CN)**
• **ZHANG, Xiaobing**
**Jiangyin City, Wuxi City, 214443 (CN)**

(74) Representative: **Becker, Eberhard**
**Becker Kurig & Partner**
**Patentanwälte mbB**
**Bavariastraße 7**
**80336 München (DE)**

(56) References cited:
WO-A1-2022/012477 $\quad$ US-A1- 2021 336 244
US-A1- 2023 098 119 $\quad$ US-A1- 2023 123 455

**Description**

BACKGROUND

Technical Field

The disclosure relates to a cell and an electronic device.

Related Art

In 2021, the sales of new energy vehicles in China exceeded 3.3 million units, and the annual total sales of the new energy market in China exceeded 5.5 million units in 2022, most of which adopted lithium-ion power batteries. Globally, there is a consensus on the rapid growth of new energy vehicles, and the development of lithium-ion batteries has entered a golden era.

In recent years, lithium-ion batteries have undergone rapid development, and most performance indicators have basically been improved meanwhile. Currently, energy density, safety, and costs are the main issues of concern to major cell suppliers.

However, the weight energy density of conventional lithium iron phosphate power cells is generally 160 to 190 Wh/kg. Having a similar structure and energy storage mechanism to lithium iron phosphate, lithium manganese iron phosphate has a theoretical capacity comparable to lithium iron phosphate and has a higher voltage platform and can thus provide higher energy density, but it is still difficult to exceed 200 Wh/kg. Although the energy density of ternary lithium-ion batteries is higher, their high price and thermal safety make consumers somewhat hesitant. Thus, the industry chooses to use phosphate positive electrode materials together with high energy density positive electrode materials such as ternary positive electrodes, lithium-rich manganese-based positive electrodes, etc.

Common phosphate positive electrodes and ternary materials are used by mixing internally in a slurry. Since phosphate has poor conductivity, more conductive agent is required. Also, the specific surface area is large, so more binder is required. As a result, the proportion of the main material in the electrode plate is low, which affects the total energy density of the cell. At the same time, phosphate positive electrode materials with low ionic conductivity and electronic conductivity may adsorb on the surface of ternary materials, which affects the capacity performance of the ternary materials.

Moreover, materials such as lithium iron phosphate, lithium manganese iron phosphate, ternary positive electrode materials, and lithium-rich manganese-based materials each have more matching negative electrode graphite materials. If a mixed positive electrode is used, it will pose new challenges to the selection of graphite.

WO2022/012477A1 discloses in example 1: the preparation of a negative electrode plate by preparing a slurry of a first negative electrode active material (slurry A) comprising a first graphite (artificial graphite) having an OI value of 5.8 and a compacted density of 1.8 $g/cm^3$; preparing a second negative electrode active material (slurry B) comprising a second graphite (artificial graphite) having an OI value of 3.5 and a compacted density of 1.7 $g/cm^3$; and coating the negative electrode slurry A and the negative electrode slurry B on a negative electrode current collector at one time (double-sided coating) according to a mass ratio of 5:5, drying and rolling (compacted density p=1.8 $g/cm^3$

US 2021/336244 A1 discloses a secondary battery, comprising a negative electrode plate, wherein the negative electrode plate comprises a negative current collector and negative film layers, wherein the negative film layers comprise a first negative film layer and a second negative film layer, the first negative film layer is disposed on at least one surface of the negative current collector and comprises a first negative active material, and the second negative film layer is disposed on the first negative film layer and comprises a second negative active material; the first negative active material comprises natural graphite, and the second negative active material comprises artificial graphite; the first negative active material has a powder OI value $COI_1$ satisfying $4.0 \leq COI_1 \leq 7.0$; and the second negative active material has a powder OI value $COI_2$ satisfying $2.2 \leq COI_2 \leq 4.2$.

US 2023/098119 A1 discloses a negative electrode plate, comprising: a current collector; a first active layer, located on at least one surface of the current collector, and containing an active material 1; and a second active layer, located on at least one surface that is of each of the two first active layers and that is away from the current collector, and containing an active material 2, wherein a powder OI value of the active material 1 falls in a range of 8 to 32, and a powder OI value of the active material 2 falls in a range of 2 to 7.

SUMMARY

To address the difficulty in matching the positive electrode material and the negative electrode material in the secondary battery in the related art and its impact on the total energy density and capacity performance of the cell, the disclosure provides a cell and an electronic device. The positive electrode and the negative electrode in the cell of the disclosure are reasonably matched, which can maximize the performances of total energy density and capacity of the cell while taking safety into account.

The disclosure addresses the above technical problems mainly by the following technical solutions.

The invention is set out in the appended set of claims. The following disclosure serves a better understanding of the present invention. According to a first aspect, the disclosure provides a cell including a positive electrode plate and a negative electrode plate alternately arranged along a cell thickness direction, with a separator provided between the positive electrode plate and the negative electrode plate. The positive electrode plate includes a positive electrode current collector, a first positive electrode film, and a second positive electrode film, and the first positive electrode film and the second positive electrode film are respectively arranged on two opposite surfaces of the positive electrode current collector. The first positive electrode film includes a first positive electrode active substance that includes a phosphate material, the second positive electrode film includes positive electrode active substance that has a gram capacity greater than a gram capacity of the first positive electrode active substance. The negative electrode plate includes a negative electrode current collector, a first negative electrode film, and a second negative electrode film, and the first negative electrode film and the second negative electrode film are respectively arranged on two opposite surfaces of the negative electrode current collector. The first negative electrode film includes a first negative electrode active substance, the second negative electrode film includes a second negative electrode active substance, and $OI_2-OI_1>5$ is satisfied, where $OI_2$ is an OI value of the second negative electrode film, and $OI_1$ is an OI value of the first negative electrode film.

According to a second aspect, the disclosure further provides an electronic device including the cell described above.

The positive progressive effects of the disclosure are as follows. The disclosure selects different positive electrode formulations for different negative electrode formulations to maximize matching in the mixing system and achieve a combination of high energy density, high safety, and low costs.

BRIEF DESCRIPTION OF DRAWINGS

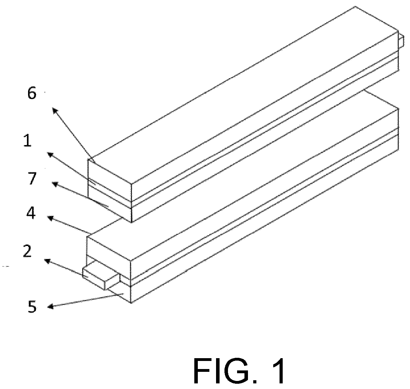

FIG. 1 is a schematic structure diagram of a cell prepared in Example 1 to Example 2 of the disclosure. (1: negative electrode current collector; 2: positive electrode current collector; 4: second positive electrode film; 5: first positive electrode film; 6: second negative electrode film; 7: first negative electrode film.)

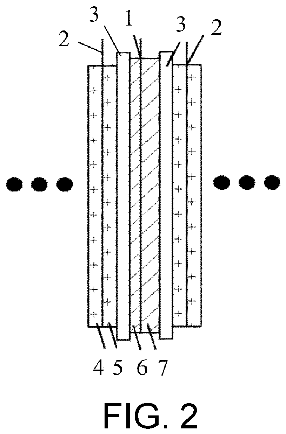

FIG. 2 is a simplified structure diagram of the cell prepared in Example 1 to Example 2 of the disclosure. (1: negative electrode current collector; 2: positive electrode current collector; 3: separator; 4: second positive electrode film; 5: first positive electrode film; 6: second negative electrode film; 7: first negative electrode film.)

DESCRIPTION OF EMBODIMENTS

In the following text, the disclosure will be described in more detail to better understand the disclosure. It should be understood that the words or terms used in this specification and the claims should not be interpreted as having the meanings defined in common dictionaries. It should be further understood that the words or terms should be interpreted as having meanings consistent with their meanings in the relevant technical context and the technical concept of the disclosure, based on the principle that the inventors may appropriately define the meanings of the words or terms to best interpret the disclosure.

Cell

In the cell according to the first aspect of the disclosure:

The two surfaces of the positive electrode respectively adopt a phosphate material and a high density active substance, which respectively correspond in a one-to-one manner to a high energy density film and a fast charging high kinetics film of the negative electrode. The positive and negative electrodes match each other to achieve a balance between energy density and fast charging performance.

Positive electrode plate

In the disclosure, the first positive electrode film is adjacent to the second negative electrode film via a separator, and the second positive electrode film is adjacent to the first negative electrode film via a separator.

In the disclosure, as the first positive electrode active substance, the phosphate material may be a positive electrode phosphate material commonly used in this field, preferably lithium iron phosphate and/or lithium manganese iron phosphate. The use of the phosphate material can reduce the system cost and improve safety performance.

Preferably, based on the mass of the first positive electrode film, the mass content of the phosphate material is 92% to 97%, for example, 94% or 95%.

Preferably, the discharge gram capacity of the phosphate material at a current density of 0.1C is 160 mAh/g or below, more preferably 127 to 160 mAh/g, for example, 141 mAh/g or 157 mAh/g.

In the disclosure, the second positive electrode active substance is a high energy density active substance commonly used in this field, and its use can enhance the energy density and low temperature cycling performance of the battery.

Preferably, the second positive electrode active substance includes one or more of lithium manganate, lithium cobalt oxide, lithium nickelate, lithium nickel cobalt aluminum oxide, lithium nickel cobalt manganese oxide, and lithium-rich manganese-based materials.

When the second positive electrode active substance includes lithium nickel cobalt aluminum oxide or lithium nickel cobalt manganese oxide, in the lithium nickel cobalt aluminum oxide or lithium nickel cobalt manganese oxide, based on the mass of the lithium nickel cobalt aluminum oxide or lithium nickel cobalt manganese oxide, the mass content of Ni is 60% or more.

Preferably, based on the mass of the second positive electrode film, the content of the second positive electrode active substance is 94% to 98%, for example, 96%.

Preferably, the discharge gram capacity of the second positive electrode active substance at a current density of 0.1C is 180 mAh/g or more, more preferably 180 to 210 mAh/g, for example, 198 mAh/g.

In some preferred embodiments, the content of the second positive electrode active substance is greater than the content of the first positive electrode active substance.

In some preferred embodiments, the first positive electrode active substance is lithium manganese iron phosphate, and the second positive electrode active substance is lithium nickel cobalt manganese oxide.

The lithium manganese iron phosphate is preferably $LiMn_{0.6}Fe_{0.4}PO_4$, and the lithium nickel cobalt manganese oxide is preferably $LiNi_{0.8}Co_{0.1}Mn_{0.1}O_2$.

In some preferred embodiments, the first positive electrode active substance is lithium iron phosphate, and the second positive electrode active substance is lithium nickel cobalt manganese oxide.

The lithium iron phosphate is preferably $LiFePO_4$, and the lithium nickel cobalt manganese oxide is preferably $LiNi_{0.8}Co_{0.1}Mn_{0.1}O_2$.

In the disclosure, the thickness ratio of the first positive electrode film to the second positive electrode film is preferably (1.1 to 2.5), for example, 1.98:1 or 1.63:1.

In the disclosure, the thickness of the first positive electrode film may be 50 to 120 $\mu$m, preferably 60 to 100 $\mu$m, for example, 76 $\mu$m or 91 $\mu$m.

In the disclosure, the thickness of the second positive electrode film may be 30 to 90 $\mu$m, preferably 40 to 70 $\mu$m, for example, 47 $\mu$m.

In the disclosure, positive electrode active substances of different capacities are selected, which require negative electrode materials with matching capacities. When an appropriate thickness ratio is selected, it is possible to control the thickness difference between the front and back surfaces of the negative electrode to be small, which is beneficial for the processing of the negative electrode.

The thickness described in the disclosure is calculated according to the following method.

Let the thickness of the first positive electrode film be $h_1$, the specific discharge capacity of the first positive electrode film be $x_1$, and the specific discharge capacity of the second negative electrode film be $x_2$; the proportion of the first positive electrode active substance be $y_1$, the proportion of the second negative electrode active substance be $y_2$, the compacted density of the first positive electrode film after rolling be $z_1$, and the compacted density of the second negative electrode film after rolling be $z_2$; and N/P be $a_1$. Then, the thickness $h_2$ of the second negative electrode film is

$$\frac{a_1 \times x_1 \times y_1 \times z_1 \times h_1}{x_2 \times y_2 \times z_2}.$$

Let the thickness of the second positive electrode film be $h_3$, the specific discharge capacity of the second positive electrode film be $x_3$, and the specific discharge capacity of the first negative electrode film be $x_4$; the proportion of the second positive electrode active substance be $y_3$, the proportion of the first negative electrode active substance be $y_4$, the compacted density of the second positive electrode film after rolling be $z_3$, and the compacted density of the first electrode film after rolling be z4; and N/P be a2. Then the thickness h4 of the first negative electrode film is $\frac{a_2 \times x_3 \times y_3 \times z_3 \times h_3}{x_4 \times y_4 \times z_4}.$

N/P may be 1.02 to 1.14, and $a_1 \geq a_2$. The N/P, which stands for negative/positive, is "capacity of negative electrode per unit area/capacity of positive electrode per unit area", and is generally a ratio of charging capacity.

$z_3 > z_1$, and $z_3 - z_1 > 0.4$ g/cm³. Since it is required to design a constant pressure and roll gap width in the rolling process of the positive electrode film, the compacted density $z_1$ of the first positive electrode film and the compacted

density $z_3$ of the second positive electrode film are different.

In some specific embodiments, the thickness of the first positive electrode film is 50 to 120 $\mu$m; the compacted density of the first positive electrode film is 2.2 to 2.6 g/cm$^3$; the thickness of the second positive electrode film is 30 to 90 $\mu$m; and the compacted density of the second positive electrode film is 3.3 to 3.7 g/cm$^3$.

In the disclosure, the first positive electrode film generally further includes a first positive electrode conductive agent, a first positive electrode binder, and a first positive electrode dispersant; and the second positive electrode film generally further includes a second positive electrode conductive agent, a second positive electrode binder, and a second positive electrode dispersant.

There are no specific restrictions on the first positive electrode conductive agent and the second positive electrode conductive agent, as long as they are conductive and do not cause chemical changes in the battery. Specific examples include: graphite, such as natural graphite or artificial graphite; carbon-based materials, such as carbon black, acetylene black, Ketjen black, channel black, furnace black, lamp black, thermal carbon black, and carbon fibers; metal powders or metal fibers, such as copper, nickel, aluminum, and silver; conductive whiskers, such as zinc oxide whiskers and potassium titanate whiskers; conductive metal oxides, such as titanium dioxide; or conductive polymers, such as polyphenylene derivatives, etc.

In the first positive electrode film, the content of the first conductive agent is preferably 1% to 3%, for example, 2%, where the percentage is the percentage of the mass of the first conductive agent in the mass of the first positive electrode film.

In the second positive electrode film, the mass ratio of the second conductive agent is preferably 0.5% to 2%, for example, 1.5%, where the percentage is the percentage of the mass of the second conductive agent in the mass of the second positive electrode film.

The first positive electrode binder and the second positive electrode binder serve to enhance the binding between the positive electrode active substance particles and the adhesion between the positive electrode active substance and the positive electrode current collector. There are no specific restrictions on their types, and specific examples of the binders may include polyvinylidene fluoride (PVDF), polyvinylidene fluoride-co-hexafluoropropylene (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene monomer (EPDM), sulfonated EPDM, styrene-butadiene rubber (SBR), fluororubber, or various copolymers thereof, and any one or a mixture of two or more of the above may be used.

In the first positive electrode film, the content of the first binder is preferably 1.5% to 4%, for example, 3.5%, where the percentage is the percentage of the mass of the first binder in the mass of the first positive electrode film. An increase in the proportions of the conductive agent and the binder in the first positive electrode film can enhance the electrochemical performance of the phosphate material.

In the second positive electrode film, the mass ratio of the second binder is preferably 0.5% to 2%, where the percentage is the percentage of the mass of the second binder in the mass of the second positive electrode film.

Preferably, the content of the second positive electrode binder is lower than the content of the first positive electrode binder.

The first dispersant and the second dispersant may be substances commonly used in this field to improve dispersion uniformity of the active substances.

In the first positive electrode film, the content of the first dispersant may be 0 to 1%, where the percentage is the percentage of the mass of the first dispersant in the mass of the first positive electrode film.

In the second positive electrode film, the content of the second dispersant may be 0 to 1%, where the percentage is the percentage of the mass of the second dispersant in the mass of the second positive electrode film.

In the disclosure, the method for preparing the positive electrode plate includes the following steps: coating the raw material mixture of the first positive electrode film and the raw material mixture of the second positive electrode film respectively on two surfaces of the positive electrode current collector to obtain the positive electrode plate.

In the disclosure, the surface density generally refers to the mass of the raw material mixture coated per unit area, and refers to one surface.

In some specific embodiments of the disclosure, the surface densities of the first positive electrode film and the second positive electrode film may be 15 to 32 mg/cm$^2$, preferably 20 to 25 mg/cm$^2$, for example, 22 mg/cm$^2$.

In some preferred embodiments, the surface density of the second positive electrode film is less than the surface density of the first positive electrode film.

In some preferred embodiments, the surface density of the raw material composition of the second positive electrode film during coating is 60% to 95% of the surface density of the raw material composition of the first positive electrode film during coating.

Negative electrode plate

In the disclosure, the OI value refers to the degree of orientation, which may be calculated based on data measured by XRD. The OI value is a ratio of the peak area of the 004 characteristic peak in the X-ray diffraction spectrum of the negative electrode film to the peak area of the 110 characteristic peak in the X-ray diffraction spectrum of the negative electrode film.

In the disclosure, $OI_1 = C_{004}/C_{110}$, where $C_{004}$ is the peak area of the 004 characteristic diffraction peak in the X-ray diffraction spectrum of the first negative electrode film; and $C_{110}$ is the peak area of the 110 characteristic diffraction peak in the X-ray diffraction spectrum of the first negative electrode film.

$OI_2 = C'_{004}/C'_{110}$, where $C'_{004}$ is the peak area of the 004 characteristic diffraction peak in the X-ray diffraction spectrum of the second negative electrode film; and $C'_{110}$ is the peak area of the 110 characteristic diffraction peak in the X-ray diffraction spectrum of the second negative electrode film.

In the disclosure, XRD is measured with Bruker D8A25 X-ray diffractometer.

The magnitude of the OI value of the negative electrode film may reflect the degree of stacking orientation of the negative electrode active material particles in the negative electrode film, which directly affects the expansion of the negative electrode plate in the cycling process. In the charging process, lithium ions are de-intercalated from the positive electrode active substance and intercalated in the negative electrode active substance, so the OI value of the negative electrode film has a great impact on the charging speed and cycle life of the lithium-ion battery.

When the difference between $OI_2$ and $OI_1$ is greater than 5, the high energy and high kinetics characteristics of the different active substances on two surfaces of the negative electrode plate can be fully utilized. Specifically, the high energy active substance has advantages of high gram capacity and high degree of orientation and can contribute to higher energy density. In the related art, active substances with high OI and low OI are mixed and used together, but the mixture of low OI value with high OI generally fails to create excellent rate capability and high kinetics performance. In the disclosure, active substances with high OI and low OI values are respectively coated on two opposite surfaces of the negative electrode current collector, which can balance the combination of high kinetics and energy density.

In some specific embodiments, the OI value $OI_1$ of the first negative electrode film is 2 to 15, preferably 4 to 10.

In some specific embodiments, the OI value $OI_2$ in the second negative electrode film is 15 to 50, preferably 15 to 40.

In some preferred embodiments, the $OI_2 - OI_1$ is 5 to 15, for example, 12 or 14.

In the disclosure, the first negative electrode active substance and the second negative electrode active substance may each independently include one or two of graphite and silicon materials. The graphite includes natural graphite or artificial graphite; and the silicon materials include at least one of silicon-carbon material or carbon-silicon-oxygen material.

It can be understood that the silicon-carbon material refers to a material that contains both silicon element and carbon element. Exemplarily, the silicon-carbon material has a structure in which silicon nanocrystal particles are filled in pores of a carbon skeleton. It can be understood that the silicon-oxygen-carbon material refers to a material that contains silicon element, oxygen element, and carbon element at the same time. Exemplarily, the silicon-oxygen-carbon material has as structure in which silicon nanocrystal particles are dispersed in a silicon dioxide matrix to form a composite, and elemental carbon is wrapped on the outer surface of the composite.

In the disclosure, based on the mass of the first negative electrode film, the mass content of the first negative electrode active substance is 93 to 98%, for example, 96%.

In the disclosure, based on the mass of the first negative electrode film, the first negative electrode film may further include 0.2 to 1.5% of a first negative electrode conductive agent, 1 to 3% of a first negative electrode binder, and 0.01 to 1.5% of a first negative electrode dispersant.

In the disclosure, based on the mass of the second negative electrode film, the mass content of the second negative electrode active substance is preferably 95 to 98.5%, for example, 95%.

In some specific embodiments, the types of the first negative electrode active substance and the second negative electrode active substance are the same as each other, and the mass content of the first negative electrode active substance is lower than the mass content of the second negative electrode active substance. When the mass contents of the first negative electrode active substance and the second negative electrode active substance satisfy the above conditions, the capacity retention rate of the battery can be effectively improved.

In the disclosure, based on the mass of the second negative electrode film, the second negative electrode film may further include 0.2 to 1.5% of a second negative electrode conductive agent, 0.5 to 2% of a second negative electrode binder, and 0.01 to 1.5% of a second negative electrode dispersant.

The first negative electrode conductive agent and the second negative electrode conductive agent are reagents used to ensure that the electrode has good charge and discharge performance. They may be selected from any of graphite materials such as natural graphite and artificial graphite, carbon black materials such as carbon black, acetylene black, Ketjen black, channel black, furnace black, lamp black, and thermal carbon black, conductive fibers such as carbon fibers and metal fibers, metal powders such as fluorocarbon powder, aluminum powder, and nickel powder, conductive whiskers such as zinc oxide, potassium titanate, and conductive metal oxides such as titanium dioxide, or polyphenylene derivatives.

The first negative electrode binder and the second negative electrode binder are components that contribute to binding between the active substance and the conductive agent and contribute to combination of the active substance with the current collector. They may generally be selected from polyvinylidene difluoride, polyvinyl alcohol, carboxymethyl cellulose (CMC), starch, hydroxypropyl cellulose, regenerated cellulose, polyvinylpyrrolidone, polyacrylic acid (PAA), tetrafluoroethylene, polyethylene, polypropylene, ethylene-propylene-diene terpolymer (EPDM), sulfonated EPDM, styrene-butadiene rubber (SBR), fluororubber, and various copolymers.

In the disclosure, the thickness of the first negative electrode film and the thickness of the second negative electrode film may be the same as or different from each other.

In some specific embodiments, the compacted density of the second negative electrode film is greater than that of the first negative electrode film.

In some specific embodiments, the gram capacity of the second negative electrode film is greater than that of the first negative electrode film.

In some specific embodiments, the thickness of the second negative electrode film is slightly greater than that of the first negative electrode film.

In the disclosure, the thickness of the first negative electrode film may be 50 to 100 $\mu$m, preferably 50 to 60$\mu$m, for example, 52$\mu$m.

In the disclosure, the thickness of the second negative electrode film may be 50 to 100 $\mu$m, preferably 50 to 60$\mu$m, for example, 54$\mu$m.

In some specific embodiments, the first positive electrode active substance is lithium manganese iron phosphate, the second positive electrode active substance is lithium nickel cobalt manganese oxide, the first negative electrode active substance is artificial graphite, and the second negative electrode active substance is artificial graphite, where $OI_2$-$OI_1$ is 10.

In some more specific embodiments, the first positive electrode active substance is lithium manganese iron phosphate, the thickness of the first positive electrode film is 91 $\mu$m, the second positive electrode active substance is lithium nickel cobalt manganese oxide, and the thickness of the second positive electrode film is 47 $\mu$m; the first negative electrode active substance is artificial graphite, the thickness of the first negative electrode film is 52 $\mu$m, the second negative electrode active substance is artificial graphite, the thickness of the second negative electrode film is 54 $\mu$m, and $OI_2$-$OI_1$ is 10.

In some specific embodiments, the first positive electrode active substance is lithium iron phosphate, the second positive electrode active substance is lithium nickel cobalt manganese oxide, the first negative electrode active substance is artificial graphite, and the second negative electrode active substance is artificial graphite, where $OI_2$-$OI_1$ is 12.

In some more specific embodiments, the first positive electrode active substance is lithium iron phosphate, the thickness of the first positive electrode film is 76 $\mu$m, the second positive electrode active substance is lithium nickel cobalt manganese oxide, and the thickness of the second positive electrode film is 47 $\mu$m; the first negative electrode active substance is artificial graphite, the thickness of the first negative electrode film is 52 $\mu$m, the second negative electrode active substance is artificial graphite, the thickness of the second negative electrode film is 54 $\mu$m, and $OI_2$-$OI_1$ is 12.

In some specific embodiments of the disclosure, the surface densities of the first negative electrode film and the second negative electrode film may be 7 to 20 mg/cm$^2$, preferably 8 to 12 mg/cm$^2$, for example, 10 mg/cm$^2$.

In the disclosure, the method for preparing the negative electrode plate includes the following steps: coating the raw material mixture of the first negative electrode film and the raw material mixture of the second negative electrode film respectively on the two opposite surfaces of the negative electrode current collector to obtain the negative electrode plate.

In the disclosure, the method for preparing the cell may adopt conventional methods in this field, and generally include the following steps: after rolling and slitting the positive electrode plate and the negative electrode plate, successively stacking the positive electrode plate, the separator, and the negative electrode plate by cutting, stacking, or winding processes to form a cell.

Electronic device

The electronic device according to the third aspect of the disclosure includes the cell described above.

Exemplarily, the electronic device of the disclosure may be, but is not limited to, a mobile device (e.g., a mobile phone, a tablet computer, a laptop, a camcorder, a portable printer/copier, etc.), an electric vehicle (e.g., a pure electric car, a hybrid electric car, a plug-in hybrid electric car, an electric bicycle, an electric scooter, an electric golf cart, an electric truck, etc.), an electric train, a ship and a satellite, an energy storage system, a backup power supply, etc.

Based on the common knowledge in this field, the above preferred conditions may be combined in any manner to obtain the better examples of the disclosure. The disclosure will be further illustrated based on the following examples, but the disclosure is not thus limited to the scope of the described examples. Any experimental methods in the following examples for which specific conditions are not described may be selected according to conventional methods and conditions or according to product instruction manuals.

Example 1

(1) Preparation of positive electrode plate:

Preparation of raw material mixture $A_1$ of first positive electrode film: A mixture of lithium manganese iron phosphate ($LiMn_{0.6}Fe_{0.4}PO_4$), a conductive agent SP, and a binder PVDF with a mass ratio of 95.5:2:2.5 was fully stirred in a stirrer, and then a solvent N-methylpyrrolidone was added at a solid content of 55% and stirred and uniformly mixed to prepare a first positive electrode slurry $A_1$. The discharge gram capacity of $LiMn_{0.6}Fe_{0.4}PO_4$ at a current density of 0.1C was 141 mAh/g.

Preparation of raw material mixture $A_2$ of second positive electrode film: A mixture of $LiNi_{0.8}Co_{0.1}Mn_{0.1}O_2$, a conductive agent SP, and a binder PVDF with a mass ratio of 97:1.5:1.5 was fully stirred in a stirrer, and then a solvent N-methylpyrrolidone was added at a solid content of 60% and stirred and uniformly mixed to prepare a second positive electrode slurry $A_2$. The discharge gram capacity of $LiNi_{0.8}Co_{0.1}Mn_{0.1}O_2$ at a current density of 0.1C was 198 mAh/g.

The raw material mixture $A_1$ of the first positive electrode film and the raw material mixture $A_2$ of the second positive electrode film were uniformly coated on the current collector at a surface density of 22 mg/cm$^2$, and then treated with a coating drying machine to prepare a positive electrode plate of a specified size.

(2) Preparation of negative electrode plate

Preparation of raw material mixture $B_1$ of the first negative electrode film: A mixture of artificial graphite, a conductive agent SP, a binder SBR+PAA, and a dispersant CMC with a mass ratio of 96:1:2:1 was fully stirred in a stirrer, and then a solvent N-methylpyrrolidone or deionized water was added at a solid content of 58% and stirred and uniformly mixed to prepare a first negative electrode slurry $B_1$.

Preparation of raw material mixture $B_2$ of second negative electrode film: A mixture of artificial graphite, a conductive agent SP, a binder SBR+PAA, and a dispersant CMC with a mass ratio of 95:1.5:2.5:1 was fully stirred in a stirrer, and then a solvent N-methylpyrrolidone or deionized water was added at a solid content of 56% and stirred and uniformly mixed to prepare a second negative electrode slurry $B_2$.

The raw material mixture $B_1$ of the first negative electrode film and the raw material mixture $B_2$ of the second negative electrode film were uniformly coated on two surfaces of the current collector at a surface density of 10 mg/cm$^2$ to prepare a first negative electrode film and a second negative electrode film, which was then treated with a coating drying machine to prepare a negative electrode plate of a specified size. The degree of orientation $OI_1$ of the first negative electrode film was 8, and the degree of orientation $OI_2$ of the second negative electrode film was 18.

(3) Preparing electrolytic solution:

The organic solvent was a mixture of ethylene carbonate (EC), ethyl methyl carbonate (EMC), and diethyl carbonate (DEC), where the volume ratio of EC, EMC, and DEC was 20:20:60. In an argon atmosphere glove box with a moisture content of <10ppm, a thoroughly dried lithium salt ($LiPF_6$) was dissolved in the organic solvent described above, and after mixing uniformly, an electrolytic solution was obtained, where the concentration of $LiPF_6$ was 1 mol/L.

(4) Preparing separator: A polypropylene separator with a thickness of 12 $\mu$m was selected.

(5) Assembly of cell and lithium-ion battery: The positive electrode plate, the negative electrode plate, and the separator were subjected to rolling-slitting and cutting-stacking to prepare a cell. The bare cell JR was then placed in a shell, was thoroughly baked such that the moisture content was 450 ppm or below, and then was subjected to processes including electrolyte injection, battery formation, sealing, and inspection to prepare a square hard-shell lithium-ion battery. The structure of the assembled cell is shown in FIG. 1 and FIG. 2, in which the two opposite surfaces of the negative electrode current collector 1 are respectively provided with the first negative electrode film 7 and the second negative electrode film 6, the two opposite surfaces of the positive electrode current collector 2 are respectively provided with the first positive electrode film 5 and the second positive electrode film 4, the first positive electrode film 5 and the second negative electrode film 6 are adjacent via the separator 3, and the second positive electrode film 4 and the first negative electrode film 7 are adjacent via the separator 3.

Example 2

The first positive electrode active substance in the raw material mixture of the first positive electrode film was replaced with lithium iron phosphate ($LiFePO_4$), where the discharge gram capacity of $LiFePO_4$ at a current density of 0.1C was 157 mAh/g.

The degree of orientation OI of the first negative electrode film was 8, and the degree of orientation OI of the second negative electrode film was 20.

The other formulation components and preparation methods were the same as in Example 1.

Comparative Example 1

Both the first positive electrode film and the second positive electrode film in the positive electrode plate were prepared by coating the raw material mixture $A_1$ of the first positive electrode film in Example 1.

Both the first negative electrode film and the second negative electrode film of the negative electrode plate were prepared by coating the raw material mixture $B_2$ of the second negative electrode film in Example 1, where the degrees of orientation OI of both the first negative electrode film and the second negative electrode film were 18.

The other formulation components and preparation methods were the same as in Example 1.

Comparative Example 2

Both the first positive electrode film and the second positive electrode film in the positive electrode plate were prepared by coating the raw material mixture $A_2$ of the second positive electrode film in Example 1.

Both the first negative electrode film and the second negative electrode film of the negative electrode plate were prepared by coating the raw material mixture $B_1$ of the first negative electrode film in Example 1, where the degrees of orientation OI of both the first negative electrode film and the second negative electrode film were 8.

The other formulation components and preparation methods were the same as in Example 1.

Comparative Example 3

The first negative electrode film was prepared by coating the raw material mixture $B_2$ of the second negative electrode film in Example 1; and the second negative electrode film was prepared by coating the raw material mixture $B_1$ of the first negative electrode film in Example 1, where the degree of orientation OI of the first negative electrode film was 18, and the degree of orientation OI of the second negative electrode film was 8.

The other formulation components and preparation methods were the same as in Example 1.

Comparative Example 4

The first negative electrode film was prepared by coating the raw material mixture $B_2$ of the second negative electrode film in Example 1, and the degree of orientation OI of the first negative electrode film was 18.

The degree of orientation OI of the second negative electrode film was 20.

The other formulation components and preparation methods were the same as in Example 1.

Comparative Example 5

Both the first positive electrode film and the second positive electrode film in the positive electrode plate were prepared by coating the raw material mixture $A_1$ of the first positive electrode film in Example 1.

The degree of orientation OI of the first negative electrode film was 18; and the degree of orientation OI of the second negative electrode film was 7.

The other formulation components and preparation methods were the same as in Example 1.

Comparative Example 6

Both the first negative electrode film and the second negative electrode film in the negative electrode plate were prepared by coating the raw material mixture $B_2$ of the second negative electrode film in Example 1, where the degrees of orientation OI of both the first negative electrode film and the second negative electrode film were 18.

The rest was the same as in Example 1.

The film thicknesses of Example 1 to Example 2 and Comparative Example 1 to Comparative Example 6 are shown in Table 1.

Table 1

| | Thickness of first positive electrode film ($\mu$m) | Thickness of second positive electrode film ($\mu$m) | Thickness of first negative electrode film ($\mu$m) | Thickness of second negative electrode film ($\mu$m) |
|---|---|---|---|---|
| Example 1 | 91 | 47 | 52 | 54 |
| Example 2 | 76 | 47 | 52 | 54 |
| Comparative Example 1 | 91 | 91 | 52 | 52 |
| Comparative Example 2 | 47 | 47 | 54 | 54 |
| Comparative Example 3 | 91 | 47 | 54 | 52 |
| Comparative Example 4 | 91 | 47 | 52 | 52 |
| Comparative Example 5 | 91 | 91 | 52 | 55 |
| Comparative Example 6 | 91 | 91 | 52 | 52 |

Verification Example 1

Capacity retention rates of the batteries prepared from Example 1 to Example 2 and Comparative Example 1 to Comparative Example 6 were tested after 0 to 1000 cycles under the condition of a charging or discharging voltage of 1C at 45°C. The results are shown in Table 2.

Table 2

| Number of cycles | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|
| Capacity retention rate | | | | | | | | |
| 0 | 100% | 100% | 100% | 100% | 100% | 100% | 100% | 100% |
| 100 | 99.95% | 99.20% | 98.19% | 98.54% | 99.0% | 99.1% | 99.75% | 99.65% |
| 200 | 98.67% | 98.66% | 97.50% | 96.09% | 98.1% | 98.3% | 98.5% | 98.32% |
| 300 | 97.46% | 97.32% | 96.78% | 94.40% | 97.0% | 97.1% | 97.5% | 97.01% |
| 500 | 94.35% | 95.04% | 95.67% | 92.01% | 94.6% | 94.8% | 94.3% | 93.75% |
| 700 | 92.26% | 92.83% | 93.71% | 89.09% | 92.4% | 92.6% | 91.9% | 91.01% |
| 1000 | 90.32% | 90.57% | 91.85% | 85.22% | 89.1% | 90.1% | 89.5% | 87.62% |

Table 3

| | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|
| Energy density (wh/kg) | 246 | 239 | 193 | 273 | 243 | 248 | 191 | 244 |

As can be learned from Table 2 and Table 3, the disclosure reasonably matches the positive electrode materials and the negative electrode materials. Under these matching conditions, the batteries prepared from Example 1 and Example 2 have advantages of high energy density and good cycling performance. Specifically, the energy density can reach 246 wh/kg or more, and the capacity retention rate after 1000 cycles can be 90.32% or even more.

Comparing Example 1 and Comparative Example 1, Comparative Example 1 adopted the same first positive electrode film and second positive electrode film, both of which were phosphate positive electrodes, and adopted the same first negative electrode film and second negative electrode film, both of which were negative electrodes with high OI values. It can be learned that although it had a capacity retention rate comparable to that of Example 1, its energy density was lower than that of Example 1 and was only 193 wh/kg.

Comparing Example 1 and Comparative Example 2, Comparative Example 2 adopted the same first positive electrode film and second positive electrode film, both of which were 8-series high-nickel ternary positive electrodes, and adopted the same first negative electrode film and second negative electrode film, both of which were negative electrodes with low OI values. It can be learned that although it retained the high energy density characteristic of the positive electrode material, its capacity retention rate after 1000 cycles was only 85.22%, which was lower than that of Example 1.

Comparing Example 1 and Comparative Example 3, in Comparative Example 3, the first negative electrode film (low OI value) was adjacent to the first positive electrode film, and the second negative electrode film (high OI value) was adjacent to the second positive electrode film. Although its energy density was comparable to that of Example 1, its cycling stability was lower than that of Example 1.

Comparing Example 1 and Comparative Example 4, in Comparative Example 4, both the first negative electrode film and the second negative electrode film adopted negative electrode materials with high OI values, and the difference of $OI_2-OI_1$ was 2. As a result, its capacity retention rate after 1000 cycles was 90.1%, and the energy density was 248 wh/kg.

Comparing Example 1 and Comparative Example 5, in Comparative Example 5, both the first positive electrode film and the second positive electrode film adopted the same phosphate positive electrode material. Its energy density was only 191 wh/kg, and its capacity retention rate after 1000 cycles was only 89.5%, both of which were lower than those of Example 1.

Comparing Example 1 and Comparative Example 6, in Comparative Example 6, both the first negative electrode film and the second negative electrode film adopted the same negative electrode material with a high OI value, and the difference of $OI_2-OI_1$ was 0. Although its energy density was comparable to that of Example 1, its cycling stability was lower than that of Example 1, and the capacity retention rate after 1000 cycles was only 87.62%.

As can be learned from the above comparisons, it was the special matching relationship between the positive and negative electrode materials in the disclosure that created the excellent energy density and cycling performance.

Verification Example 2

After the batteries prepared from Example 1 to Example 2, Comparative Example 1, Comparative Example 2, and Comparative Example 6 were cycled 1000 times under the condition of a charging or discharging voltage of 1C at 45°C, the negative electrode of the cell was dissembled and subjected to ICP test analysis. The results are shown in Table 4.

Table 4

|  | Ni | Co | Fe | Mn |
|---|---|---|---|---|
| First negative electrode film of Example 1 | / | / | 190 ppm | 540 ppm |
| Second negative electrode film of Example 1 | 240 ppm | 90 ppm | / | 40 ppm |
| First negative electrode film of Example 2 | / | / | / | 30 ppm |
| Second negative electrode film of Example 2 | 630 ppm | 280 ppm | / | 110 ppm |
| Negative electrode film of Comparative Example 1 | / | / | 230 ppm | 770 ppm |
| Negative electrode film of Comparative Example 2 | 430 ppm | 120 ppm | / | 50 ppm |
| First negative electrode film of Comparative Example 6 | / | / | 220 ppm | 660 ppm |
| Second negative electrode film of Comparative Example 6 | 580 ppm | 190 ppm | / | 80 ppm |

As can be learned from Table 4, the ICP test element distributions after cycling of the cells prepared from Example 1, Example 2, Comparative Example 1, Comparative Example 2, and Comparative Example 6 were also different. After 1000 cycles, Co and Ni were present on the negative electrode plate, which suggests that the material used in its positive electrode included nickel, cobalt and manganese.

**Claims**

1. A cell, comprising a positive electrode plate and a negative electrode plate alternately arranged along a cell thickness direction, with a separator (3) provided between the positive electrode plate and the negative electrode plate, wherein

   the positive electrode plate comprises a positive electrode current collector (2), a first positive electrode film (5), and a second positive electrode film (4), and the first positive electrode film (5) and the second positive electrode film (5) are respectively arranged on two opposite surfaces of the positive electrode current collector (2), wherein the first positive electrode film (5) comprises a first positive electrode active substance that comprises a phosphate material, the second positive electrode film (4) comprises a second positive electrode active substance that has a discharge gram capacity at a current density of 0.1C greater than a discharge gram capacity of the first positive electrode active substance at a current density of 0.1C, and
   the negative electrode plate comprises a negative electrode current collector (1), a first negative electrode film (7), and a second negative electrode film (6), and the first negative electrode film (7) and the second negative electrode film (6) are respectively arranged on two opposite surfaces of the negative electrode current collector (1), wherein the first negative electrode film (7) comprises a first negative electrode active substance, the second negative electrode film (6) comprises a second negative electrode active substance, and $OI_2-OI_1>5$ is satisfied, wherein $OI_2$ is an OI value of the second negative electrode film (6), and $OI_1$ is an OI value of the first negative electrode film (7), and the OI value is a ratio of a peak area of a 004 characteristic peak in an X-ray diffraction spectrum of the first negative electrode film or the second negative electrode film to a peak area of a 110 characteristic peak in an X-ray diffraction spectrum of the first negative electrode film or the second negative electrode film.

2. The cell according to claim 1, wherein the first positive electrode film (5) is adjacent to the second negative electrode film (6) via the separator (3), and the second positive electrode film (4) is adjacent to the first negative electrode film (7) via the separator (3).

3. The cell according to claim 1, wherein a thickness ratio of the first positive electrode film (5) to the second positive electrode film (4) is (1.1 to 2.5):1.

4. The cell according to claim 1, wherein the first positive electrode active substance and the second positive electrode active substance satisfy one or more of conditions a to d below:

   a. the phosphate material is lithium iron phosphate and/or lithium manganese iron phosphate;
   b. the second positive electrode active substance comprises one or more of lithium manganate, lithium cobalt oxide, lithium nickelate, lithium nickel cobalt aluminum oxide, lithium nickel cobalt manganese oxide, and lithium-rich manganese-based materials;
   c. the discharge gram capacity of the first positive electrode active substance at a current density of 0.1C is 127 to 160 mAh/g; and
   d. the discharge gram capacity of the second positive electrode active substance at a current density of 0.1C is 180 to 210 mAh/g.

5. The cell according to claim 1, wherein the first positive electrode active substance and the second positive electrode active substance satisfy one or more of conditions e to g below:

   e. based on a mass of the first positive electrode film, a mass content of the first positive electrode active substance is 92% to 97%;
   f. based on a mass of the second positive electrode film, a mass content of the second positive electrode active substance is 94 to 98%; and
   g. the mass content of the second positive electrode active substance is greater than the mass content of the first positive electrode active substance.

6. The cell according to claim 1, wherein the first negative electrode film (7) and the second negative electrode film (6) satisfy one or more of conditions a to c below:

   a. the OI value $OI_1$ in the first negative electrode film (7) is 2 to 15;
   b. the OI value $OI_2$ in the second negative electrode film (6) is 15 to 50; and
   c. the $OI_2-OI_1$ is higher than 5 and not lower than 15.

7. The cell according to claim 1, wherein the first negative electrode active substance and the second negative electrode active substance each independently comprise one or both of graphite and silicon materials.

8. The cell according to claim 1, wherein a thickness of the first negative electrode film (7) and a thickness of the second negative electrode film (6) satisfy at least one of conditions below:

   a. the thickness of the first negative electrode film (7) and the thickness of the second negative electrode film (6) are the same as or different from each other; and
   b. the thicknesses of the first negative electrode film (7) and the second negative electrode film (6) are 50 to 100 μm.

9. The cell according to claim 1, wherein, based on a mass of the first negative electrode film (7), a mass content of the first negative electrode active substance is 93 to 98%, and
based on a mass of the second negative electrode film (6), a mass content of the second negative electrode active substance is 95 to 98.5%.

10. An electronic device comprising the cell according to any one of claims 1 to 9.

**Patentansprüche**

1. Zelle, umfassend eine positive und eine negative Elektrodenplatte, die abwechselnd entlang der Zelldicke angeordnet sind, mit einem Separator (3), der zwischen der positiven und der negativen Elektrodenplatte vorgesehen ist, wobei

   die positive Elektrodenplatte einen positiven Elektrodenstromkollektor (2), einen ersten positiven Elektrodenfilm (5) und einen zweiten positiven Elektrodenfilm (4) umfasst, wobei der erste positive Elektrodenfilm (5) und der zweite positive Elektrodenfilm (4) jeweils auf zwei gegenüberliegenden Oberflächen des positiven Elektrodenstromkollektors (2) angeordnet sind, wobei der erste positive Elektrodenfilm (5) eine erste positive Elektrodenaktivsubstanz aufweist, die ein Phosphatmaterial umfasst, wobei der zweite positive Elektrodenfilm (4) eine zweite positive Elektrodenaktivsubstanz aufweist, deren Entladekapazität bei einer Stromdichte von 0,1C größer ist als die Entladekapazität der ersten positiven Elektrodenaktivsubstanz bei einer Stromdichte von 0,1C, und die negative Elektrodenplatte einen negativen Elektrodenstromkollektor (1), einen ersten negativen Elektrodenfilm (7) und einen zweiten negativen Elektrodenfilm (6) umfasst, wobei der erste negative Elektrodenfilm (7) und der zweite negative Elektrodenfilm (6) jeweils auf zwei gegenüberliegenden Oberflächen des negativen Elektrodenstromkollektors (1) angeordnet sind, wobei der erste Negativelektrodenfilm (7) eine erste negative Elektrodenaktivsubstanz aufweist, wobei der zweite negative Elektrodenfilm (6) eine zweite negative Elektroden-aktivsubstanz aufweist und wobei $OI_2 - OI_1 > 5$ erfüllt ist, wobei $OI_2$ der OI-Wert des zweiten negativen Elektroden-films (6) und $OI_1$ der OI-Wert des ersten negativen Elektrodenfilms (7) ist und der OI-Wert ein Verhältnis einer Peakfläche eines charakteristischen 004-Peaks im Röntgenbeugungsspektrum des ersten oder des zweiten negativen Elektrodenfilms zu einer Peakfläche eines charakteristischen 110-Peaks im Röntgenbeugungsspektrum des ersten oder des zweiten negativen Elektrodenfilms ist.

2. Zelle nach Anspruch 1, wobei der erste positive Elektrodenfilm (5) über den Separator (3) an den zweiten negativen Elektrodenfilm (6) und der zweite positive Elektrodenfilm (4) über den Separator (3) an den ersten negativen Elektrodenfilm (7) angrenzt.

3. Zelle nach Anspruch 1, wobei ein Dickenverhältnis des ersten positiven Elektrodenfilms (5) zum zweiten positiven Elektrodenfilm (4) (1,1 bis 2,5):1 beträgt.

4. Zelle nach Anspruch 1, wobei die erste positive Elektrodenaktivsubstanz und die zweite positive Elektrodenaktivsubstanz eine oder mehrere der folgenden Bedingungen a bis d erfüllen:

   a. das Phosphatmaterial ist Lithiumeisenphosphat und/oder Lithiummanganeisenphosphat;
   b. die zweite positive Elektrodenaktivsubstanz umfasst eines oder mehrere der folgenden Materialien: Lithium-manganat, Lithiumkobaltoxid, Lithiumnickelat, Lithiumnickelkobaltaluminiumoxid, Lithiumnickelkobaltmangan-oxid und lithiumreiche manganbasierte Materialien;
   c. die Entladekapazität der ersten positiven Elektrodenaktivsubstanz bei einer Stromdichte von 0,1C beträgt 127 bis 160 mAh/g; und

d. die Entladekapazität der zweiten positiven Elektrodenaktivsubstanz bei einer Stromdichte von 0,1C beträgt 180 bis 210 mAh/g.

5. Zelle nach Anspruch 1, wobei die erste positive Elektrodenaktivsubstanz und die zweite positive Elektrodenaktivsubstanz eine oder mehrere der folgenden Bedingungen e bis g erfüllen:

e. bezogen auf die Masse des ersten positiven Elektrodenfilms beträgt der Massengehalt der ersten positiven Elektrodenaktivsubstanz 92% bis 97%;

f. bezogen auf die Masse des zweiten positiven Elektrodenfilms beträgt der Massengehalt der zweiten positiven Elektrodenaktivsubstanz 94 bis 98%; und

g. der Massengehalt der zweiten positiven Elektrodenaktivsubstanz ist größer als der Massengehalt der ersten positiven Elektrodenaktivsubstanz.

6. Zelle nach Anspruch 1, wobei der erste negative Elektrodenfilm (7) und der zweite negative Elektrodenfilm (6) eine oder mehrere der folgenden Bedingungen a bis c erfüllen:

a. der OI-Wert $OI_1$ in dem ersten negativen Elektrodenfilm (7) beträgt 2 bis 15;

b. der OI-Wert $OI_2$ in dem zweiten negativen Elektrodenfilm (6) beträgt 15 bis 50; und

c. der $OI_2$-$OI_1$-Wert ist höher als 5 und nicht niedriger als 15.

7. Zelle nach Anspruch 1, wobei die erste negative Elektrodenaktivsubstanz und die zweite negative Elektrodenaktivsubstanz jeweils unabhängig voneinander Graphit und/oder Silizium enthalten.

8. Zelle nach Anspruch 1, wobei eine Dicke des ersten negativen Elektrodenfilms (7) und eine Dicke des zweiten negativen Elektrodenfilms (6) mindestens eine der folgenden Bedingungen erfüllen:

a. die Dicke des ersten negativen Elektrodenfilms (7) und die Dicke des zweiten negativen Elektrodenfilms (6) sind gleich oder zueinander unterschiedlich; und

b. die Dicken des ersten negativen Elektrodenfilms (7) und des zweiten negativen Elektrodenfilms (6) betragen 50 bis 100 $\mu$m.

9. Zelle nach Anspruch 1, wobei der Massengehalt der ersten negativen Elektrodenaktivsubstanz, bezogen auf die Masse des ersten negativen Elektrodenfilms (7), 93 bis 98% beträgt und

der Massengehalt der zweiten negativen Elektrodenaktivsubstanz, bezogen auf die Masse des zweiten negativen Elektrodenfilms (6), 95 bis 98,5% beträgt.

10. Elektronische Vorrichtung, umfassend die Zelle nach einem beliebigen der Ansprüche 1 bis 9.

**Revendications**

1. Cellule comprenant une plaque d'électrode positive et une plaque d'électrode négative disposées en alternance le long d'une direction d'épaisseur de cellule, avec un séparateur (3) disposé entre la plaque d'électrode positive et la plaque d'électrode négative, dans lequel

la plaque d'électrode positive comprend un collecteur de courant d'électrode positive (2), un premier film d'électrode positive (5) et un deuxième film d'électrode positive (4) et le premier film d'électrode positive (5) et le deuxième film d'électrode positive (4) sont respectivement disposés sur deux surfaces opposées du collecteur de courant d'électrode positive (2), dans lequel le premier film d'électrode positive (5) comprend une première substance active d'électrode positive constituée d'un matériau phosphaté, le deuxième film d'électrode positive (4) comprend une deuxième substance active d'électrode positive dont une capacité de décharge en grammes à une densité de courant de 0,1C est supérieure à une capacité de décharge en grammes de la première substance active d'électrode positive à une densité de courant de 0,1C et

la plaque d'électrode négative comprend un collecteur de courant d'électrode négative (1), un premier film d'électrode négative (7) et un deuxième film d'électrode négative (6) et le premier film d'électrode négative (7) et le deuxième film d'électrode négative (6) sont disposés respectivement sur deux surfaces opposées du collecteur de courant d'électrode négative (1), dans lequel le premier film d'électrode négative (7) comprend une première substance active d'électrode négative, le deuxième film d'électrode négative (6) comprend une deuxième substance active d'électrode négative et la relation $OI_2-OI_1>5$ étant satisfaite, dans lequel $OI_2$ est une valeur OI du deuxième film d'électrode négative (6), et $OI_1$ est une valeur OI du premier film d'électrode négative (7) et la valeur OI est le rapport entre une aire de pic d'un pic caractéristique 004 dans un spectre de diffraction des rayons X du premier film d'électrode négative ou du deuxième film d'électrode négative et une aire de pic d'un pic caractéristique 110 dans un spectre de diffraction des rayons X du premier film d'électrode négative ou du deuxième film d'électrode négative.

2. Cellule selon la revendication 1, dans laquelle le premier film d'électrode positive (5) est adjacent au deuxième film d'électrode négative (6) via le séparateur (3), et le deuxième film d'électrode positive (4) est adjacent au premier film d'électrode négative (7) via le séparateur (3).

3. Cellule selon la revendication 1, dans laquelle un rapport d'épaisseur du premier film d'électrode positive (5) sur le deuxième film d'électrode positive (4) est de (1,1 à 2,5) :1.

4. Cellule selon la revendication 1, dans laquelle la substance active de la première électrode positive et la substance active de la deuxième électrode positive remplissent une ou plusieurs des conditions a à d ci-dessous :

   a. le matériau phosphaté est du phosphate de fer et de lithium et/ou du phosphate de fer et de manganèse et de lithium ;
   b. la substance active de la deuxième électrode positive comprend un ou plusieurs matériaux parmi le manganate de lithium, l'oxyde de cobalt et de lithium, le nickelate de lithium, l'oxyde de nickel-cobalt-aluminium et de lithium, l'oxyde de nickel-cobalt-manganèse et des matériaux à base de manganèse riches en lithium ;
   c. la capacité de décharge en grammes de la substance active de la première électrode positive à une densité de courant de 0,1C est comprise entre 127 et 160 mAh/g ; et
   d. la capacité de décharge en grammes de la substance active de la deuxième électrode positive à une densité de courant de 0,1C est comprise entre 180 et 210 mAh/g.

5. Cellule selon la revendication 1, dans laquelle la substance active de la première électrode positive et la substance active de la deuxième électrode positive satisfont à une ou plusieurs des conditions e à g suivantes :

   e. une teneur massique en substance active de la première électrode positive, par rapport à une masse du film de la première électrode positive, est comprise entre 92 % et 97 % ;
   f. une teneur massique en substance active de la deuxième électrode positive, par rapport à une masse du film de la deuxième électrode positive, est comprise entre 94 et 98 % ; et
   g. la teneur massique en substance active de la deuxième électrode positive est supérieure à la teneur massique en substance active de la première électrode positive.

6. Cellule selon la revendication 1, dans laquelle le premier film d'électrode négative (7) et le deuxième film d'électrode négative (6) satisfont à une ou plusieurs des conditions a à c suivantes :

   a. la valeur OI $OI_1$ du premier film d'électrode négative (7) est comprise entre 2 et 15 ;
   b. la valeur OI $OI_2$ du deuxième film d'électrode négative (6) est comprise entre 15 et 50 ; et
   c. le rapport $OI_2-OI_1$ est supérieur à 5 et supérieur à 15.

7. Cellule selon la revendication 1, dans laquelle la substance active de la première électrode négative et la substance active de la deuxième électrode négative comprennent chacune indépendamment un ou les deux de matériau graphite et/ou silicium.

8. Cellule selon la revendication 1, dans laquelle une épaisseur du premier film d'électrode négative (7) et une épaisseur du deuxième film d'électrode négative (6) satisfont à au moins une des conditions suivantes :

   a. l'épaisseur du premier film d'électrode négative (7) et l'épaisseur du deuxième film d'électrode négative (6) sont identiques ou différentes ; et
   b. les épaisseurs du premier film d'électrode négative (7) et deuxième film d'électrode négative (6) sont de 50 à 100 $\mu$m.

9. Cellule selon la revendication 1, dans laquelle, par rapport à une masse du premier film d'électrode négative (7), une teneur massique en substance active de la première électrode négative est de 93 à 98 %, et
par rapport à une masse du deuxième film d'électrode négative (6), une teneur massique en substance active de la deuxième électrode négative est de 95 à 98,5 %.

10. Dispositif électronique comprenant la cellule selon une quelconque des revendications 1 à 9.

FIG. 1

FIG. 2

**EP 4 447 142 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022012477 A1
- US 2021336244 A1

- US 2023098119 A1